# FASCICULE DE BREVET EUROPEEN

(11) **EP 1 931 454 B1**
(45) Date de publication et mention de la délivrance du brevet: **24.12.2008**
(21) Numéro de dépôt: 06794191.4
(22) Date de dépôt: 12.07.2006
(51) Int. Cl.: B01F 3/08, B01F 5/02, B01F 5/20

(54) **PROCEDE D'OXYDATION HYBRIDE ET DE MISE EN CONTACT DE FLUIDES**
VERFAHREN ZUR DURCHFÜHRUNG VON HYBRIDOXIDATION UND ZUM INKONTAKTBRINGEN VON FLÜSSIGKEITEN
METHOD FOR CARRYING OUT HYBRID OXIDATION AND FOR BRINGING FLUIDS INTO CONTACT

(30) Priorité: 10.08.2005 FR 0508498
(43) Date de publication de la demande: 18.06.2008
(73) Titulaire: Europeenne de Traitement des Eaux SA, 66250 Saint Laurent De La Salanque (FR)
(72) Inventeur: RHOUMA, Mohamed, F-66250 Saint Laurent de la Salanque (FR); MORALES, Stéphane, F-66530 Claira (FR)
(74) Mandataire: Gosse, Michel
(86) Numéro de dépôt international: PCT/FR2006/001745
(87) Numéro de publication internationale: WO 2007/017568

(56) Documents cités:
- FR-A- 751 877
- FR-A1- 2 838 067
- US-A- 4 100 071
- US-A- 5 043 104

## Description

### DOMAINE DE L'INVENTION

La présente invention concerne un nouveau procédé d'oxydation hybride et de mise en contact de fluides, destiné pour une oxydation poussée, d'au moins une phase liquide et se basant sur un réacteur triphasique et catalytique de hautes performances. Cette technologie est dotée d'une flexibilité lui permettant une application dans tous les domaines industriels, notamment pharmaceutiques ou environnementaux.

### ARRIERE PLAN TECHNOLOGIQUE

L'oxydation directe des polluants de l'eau est effectuée généralement par des réactifs chimiques comme le chlore, les dérivés du chlore (dioxyde de chlore, chloramines, hypochlorite de sodium,etc), l'électrochloration, le permanganate de potassium, le brome, le mélange chlore-brome, les rayons ultraviolets, les rayonnements ionisants, l'ozone, les ultrasons et les ultraviolets combinés à l'ozone.

Dans le domaine de traitement des eaux, aucune de ces méthodes, seule, ne s'est avérée envisageable et encourageante économiquement.

Des combinaisons de ces méthodes ont fait l'objet de plusieurs recherches. Les travaux de Gogate et Pandit « A review of imperative technologies for wastewater tratement II : hybrid methods » parus dans la revue « Advances in Enviromental Research 8(2004):553-597, résument d'une façon pertinente ces essais. Plusieurs procédés de traitement ont été proposés, tels que ceux mettant en jeu, l'ultrason/H₂O₂ ou ultrason/O₃, UV/ H₂O₂ et/ou O₃, O₃/réactif fenton et/ou UV et ou TiO₂, etc

Généralement, le coût élevé relatif à l'investissement et à l'exploitation de ces systèmes, l'encombrement, la production des boues ou autres liés à l'efficacité de traitement, sont des paramètres limitatifs pour un tel développement.

Il est important de rappeler, que dans les solutions aqueuses, l'ozone peut réagir directement avec un substrat par différentes voies du genre : cycloaddition, réactions électrophile et nucléophile, etc.

Il peut aussi se décomposer et donc réagir indirectement avec le substrat, formant ainsi des espèces plus réactives. L'ozone peut se décomposer sous l'effet des ions hydroperoxydes et les radiations UV pour libérer des entités radicalaires. Ces décompositions induites de l'ozone constituent les bases des procédés combinant ces technologies.

La réaction indirecte de l'ozone peut impliquer un certain nombre de remarques. En effet, les entités radicalaires générées par décomposition de l'ozone seront peu sélectives et la présence de pièges à radicaux dans l'eau pourra affecter l'efficacité de l'ozonation par l'action compétitive des radicaux vis-à-vis des matières à oxyder et des pièges à radicaux. Certains composés minéraux présents dans l'eau ont une grande réactivité vis-à-vis des radicaux hydroxyles comme les ions carbonates et bicarbonates.

L'UV est une méthode utilisée généralement dans le domaine de traitement des eaux à des fins de désinfection ou d'activation de l'ozone. C'est une technique qui nécessite un prétraitement de l'effluent pour éviter le colmatage au niveau des lampes.

H₂O₂ est peu recommandé de fait de sa faible efficacité, de la production de la matière organique dégradable, de génération d'éléments toxiques et de la possibilité de développement bactérien.

Le réactif Fenton présente l'inconvénient de production de boues.

Un procédé et un dispositif de mise en contact de phases, notamment gaz/liquide, à impacts multidirectionnels est décrit dans le brevet FR2838067.

Bien que constituant une étape importante dans le traitement des eaux, il présente toutefois les limitations suivantes :
- la configuration de celui-ci ne permet pas la mise en oeuvre d'une oxydation hybride ;
- il est à simple impact et est certes potentiellement efficace pour la potabilisation de l'eau ou autres types de transfert gaz/liquide et beaucoup moins pour un traitement instantané (sans recyclage) des effluents de DCO dure.

### RESUME DE L'INVENTION

L'invention vise à mettre en oeuvre un procédé du genre en question conduisant à une solution inédite et originale apte à améliorer les performances du traitement envisagé.

Elle est la réponse au problème posé d'une oxydation parfaite et poussée. Elle ne combine pas seulement les méthodes susmentionnées, mais sa conception va de pair avec la cinétique réactionnelle de chaque réactif chimique ou autres et éventuellement la spécificité de chaque méthode d'oxydation ou oxydant mis en jeu. Elle est basée essentiellement sur l'enchaînement d'au moins deux zones d'impact. Elle met en évidence la mise en oeuvre de plusieurs principes physiques comme par exemple l'impact, l'air lift, la filtration et la flottation, et ce, d'une façon intelligente et cohérente avec le milieu réactionnel. Le traitement se fait, sans génération de boues, notamment organique, présentant ainsi, un avantage essentiel de la présente innovation.

Elle concerne à cet effet un procédé d'oxydation hybride et de mise en contact de fluides, qui se caractérise essentiellement en ce que qu'il consiste à injecter simultanément au moins deux fluides dans au moins deux zones d'impacts successives, situées dans deux cuves distinctes, dont la première zone d'impact est alimentée par au moins une première canalisation et la deuxième zone d'impact par au moins une deuxième canalisation, elle même alimentée par le mélange de fluides sortant de ladite première zone.

Ledit procédé se caractérise également en ce qu'il consiste à effectuer en addition :
- dans la première cuve, au moyen d'un filtre approprié, une opération de filtration bien spécifique ;
- dans la canalisation reliant la première zone d'impact à la deuxième zone d'impact, au moyen de lampes UV et de catalyseurs de différents types, un traitement bien spécifique.

### PRESENTATION DES FIGURES

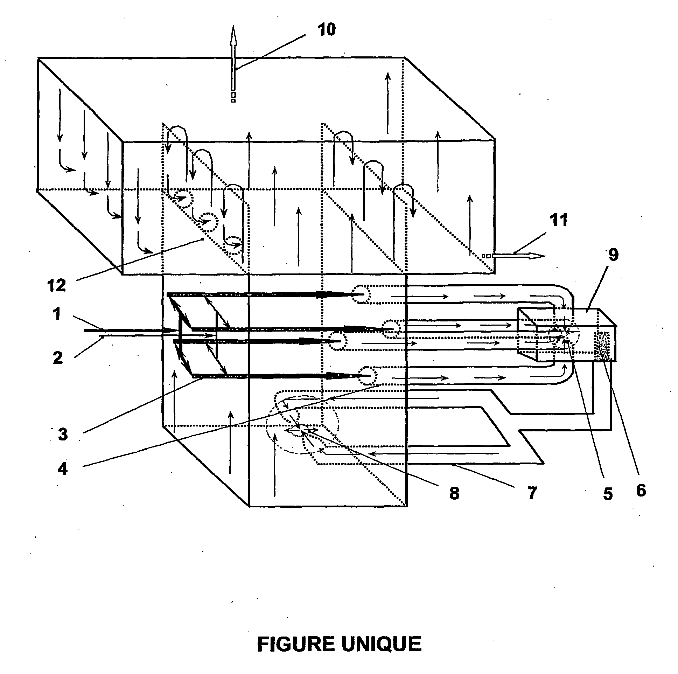

Les caractéristiques et les avantages de l'invention vont apparaître plus clairement à la lecture de la description détaillée qui suit d'au moins un mode de réalisation préféré de celle-ci donné à titre d'exemple non limitatif et représenté au dessin annexé (figure unique) qui est un schéma de principe du dispositif selon l'invention mettant en évidence les différentes étapes du procédé pour sa mise en oeuvre.

### DESCRIPTION DETAILLEE DE L'INVENTION

Le procédé d'oxydation hybride et de mise en contact de fluides, mis en oeuvre par le dispositif représenté, consiste essentiellement à injecter simultanément au moins deux fluides (1) et (2) dans au moins deux zones d'impacts successives (5) et (8), situées dans deux cuves distinctes (9) et (12), dont la première zone d'impact (5) est alimentée par au moins une première canalisation (4) et la deuxième zone d'impact (8) par au moins une deuxième canalisation (7), elle même alimentée par le mélange de fluides sortant de ladite première zone (5).

Selon la réalisation préférée de l'invention, le premier fluide (1) est une phase liquide et le second (2) une phase gazeuse qui est choisie notamment parmi l'air, l'oxygène ou l'air ozoné.

La position des injecteurs et la direction de l'injection (3) sont variables en fonction de l'application et de l'énergie mise en oeuvre.

L'injection a été optimisée pour que la vitesse initiale d'impact soit la plus élevée possible. Or, pour augmenter la réactivité de l'ozone dans ce milieu turbulent, une des caractéristiques fondamentales de l'ozone a été favorisée. En effet, la réactivité de l'ozone augmente avec la charge polluante organique. Ce phénomène est lié à la réaction directe de l'ozone.

Selon deux possibilités de réalisation additionnelles de l'invention, le procédé consiste à effectuer :
- dans la première cuve (9), au moyen d'un filtre (6) approprié, une opération de filtration bien spécifique ;
- dans la canalisation (7) reliant la première zone d'impact (5) à la deuxième zone d'impact (8), au moyen de lampes UV et de catalyseurs de différents types, un traitement bien spécifique.

Le filtre (6) peut être tubulaire ou de tout autre type et auto lavant. Les matières organiques, notamment les particules, vont être ainsi piégées et détruites directement au fur et à mesure par l'ozone. L'eau ozonée et filtrée (favorisant le rayonnement UV) va être conduite dans au moins une canalisation (7) pourvue ou non des lampes UV. Dans cette zone, l'ozone va être éventuellement activé par le rayonnement UV, en se décomposant en radicaux plus puissants

Selon d'autres particularités de réalisation de l'invention :
- la deuxième zone d'impact (8) est située à la base de la deuxième cuve (12) créant ainsi une turbulence au sein de ladite cuve apte à permettre au mélange des fluides sortant de ladite deuxième zone de monter dans celle-ci ;
- des membranes de filtration appropriées peuvent être suspendues en partie supérieure de la deuxième cuve (12), à l'intérieur de celle-ci, pour effectuer une filtration directe du fluide sortant (11).
- la filtration directe du fluide sortant (11) peut être également effectuée, au moyen d'un filtre approprié, situé à l'extérieur de la cuve verticale (12) ;
- le gaz sortant (10) ainsi que le liquide sortant (11) peuvent être recyclés.

Un réactif tel que l'oxyde de Titane peut être placé dans un endroit approprié. Dans la cuve (12), le phénomène de la flottation se produira et une couche de matières polluantes se formera. Cette couche sera détruite au fur et à mesure par les espèces oxydantes, notamment l'ozone, l'oxygène et les espèces radicalaires générées.

La partie supérieure de la cuve (12) est conçue de façon que le principe d'air lift se produise avant que l'eau traitée quitte le système, augmentant ainsi le mélange des fluides mis en jeu.

Le dispositif pour la mise en oeuvre du procédé selon l'invention comporte essentiellement :
- au moins une première canalisation (4), alimentant une première zone d'impact (5), située dans une première cuve (9), dont l'extrémité possède une forme conique ;
- au moins une deuxième canalisation (7), alimentant une deuxième zone d'impact (8), située dans une deuxième cuve (12), dont l'extrémité possède une forme conique

Les injections coniques permettent l'augmentation de la vitesse d'impact et par conséquent du degré du mélange.

Dans une expérimentation pilote du procédé et du dispositif selon l'invention, un effluent secondaire (une eau usée urbaine après traitement biologique) a été traité avec l'ozone. Pour ledit effluent, le débit maximal peut atteindre 9 m³/h. Le débit d'air ozoné maximal est de 0,7 Nm³/h. La concentration en ozone maximale est de 65 g/h.

Le temps de contact maximal est de l'ordre de deux minutes.

Trois qualités d'eau caractérisées par leur Demande Chimique en Oxygène (DCO) ont été traitées. Le taux d'élimination de la DCO (abattement) exprimé en pourcentage (%) a été déterminé pour chaque qualité d'eau (tableaux 1 à 3 ci-après).

**Tableau 1**

| | DCO (mg/l) | Abattement DCO (%) |
|---|---|---|
| Eau brute | **178** | |
| Après ozonation | 55 | **69%** |

**Tableau 2**

| | DCO (mg/l) | Abattement DCO (%) |
|---|---|---|
| Eau brute | **454** | |
| Après ozonation | 34 | **92,5%** |

**Tableau 3**

| | DCO (mg/l) | Abattement DCO (%) |
|---|---|---|
| Eau brute | **581** | |
| Après ozonation | 62 | **89%** |

Bien entendu, l'invention n'est pas limitée aux modes de réalisation décrits et représentés pour lesquels on pourra prévoir d'autres variantes, en particulier dans :
- le nombre d'injecteurs, de cuves et de zones d'impacts successives ;
- les types de fluides mélangés ;
- les types de produits chimiques ou traitements physiques additionnels.

## Revendications

1. Procédé d'oxydation hybride et de mise en contact de fluides, **caractérisé en ce qu'**il consiste à injecter simultanément au moins deux fluides (1) et (2) dans au moins deux zones d'impacts successives (5) et (8), situées dans deux cuves distinctes (9) et (12), dont la première zone d'impact (5) est alimentée par au moins une première canalisation (4) et la deuxième zone d'impact (8) par au moins une deuxième canalisation (7), elle même alimentée par le mélange de fluides sortant de ladite première zone (5).

2. Procédé selon la revendication 1, **caractérisé en ce que** le premier fluide (1) est une phase liquide et le second (2) une phase gazeuse.

3. Procédé, selon la revendication 2, **caractérisé en ce que** la phase gazeuse (2) est choisie parmi l'air, l'oxygène ou l'air ozoné.

4. Procédé selon la revendication 1, **caractérisé en ce qu'**il consiste à effectuer, en addition, dans la première cuve (9), au moyen d'un filtre (6) approprié, une opération de filtration bien spécifique.

5. Procédé selon la revendication 1, **caractérisé en ce qu'**il consiste à effectuer, en addition, dans la canalisation (7) reliant la première zone d'impact (5) à la deuxième zone d'impact (8), au moyen de lampes UV et de catalyseurs de différents types, un traitement bien spécifique.

6. Procédé, selon la revendications 1, **caractérisé en ce qu'**il consiste à situer la deuxième zone d'impact (8) à la base de la deuxième cuve (12), de manière à permettre au mélange des fluides sortant de ladite deuxième zone de monter dans ladite cuve.

7. Procédé, selon la revendication 6, **caractérisé en ce qu'**il consiste à effectuer, en partie supérieure de la deuxième cuve (12), au moyen de membranes de filtration appropriées suspendues dans celle-ci, une filtration directe du fluide sortant (11).

8. Procédé, selon la revendication 6, **caractérisé en ce qu'**il consiste à effectuer, à l'extérieur de la deuxième cuve (12), au moyen d'un filtre approprié, une filtration directe du fluide sortant (11).

9. Procédé, selon l'une quelconque des revendications précédente, **caractérisé en ce qu'**il consiste à recycler le gaz sortant (10) ainsi que le liquide sortant (11).

## Claims

1. Hybrid oxidation and fluid suspension method, **characterised in that** it consists of simultaneously injecting at least two fluids (1) and (2) in at least two successive impact zones (5) and (8), located in two separate tanks (9) and (12), wherein the first impact zone (5) is supplied by at least one first pipe (4) and the second impact zone (8) by at least one second pipe (7), in turn supplied by the mixture of fluids from said first zone (5).

2. Method according to claim 1, **characterised in that** the first fluid (1) is a liquid phase and the second (2) a gas phase.

3. Method according to claim 2, **characterised in that** the gas phase (2) is selected from air, oxygen or ozonic air.

4. Method according to claim 1, **characterised in that** it consists of additionally performing, in the first tank (9), by means of a suitable filter (6), a very specific filtration operation.

5. Method according to claim 1, **characterised in that** it consists of additionally performing, in the pipe (7) connecting the first impact zone (5) to the second impact zone (8), by means of UV lamps and catalysts of different types, a very specific treatment.

6. Method, according to claim 1, **characterised in that** it consists of locating the second impact zone (8) at the base of the second tank (12), so as to enable the mixture of the fluids from said second zone to rise into said tank.

7. Method according to claim 6, **characterised in that** it consists of performing, in the upper part of the second tank (12) by means of suitable filtration membranes suspended therein, direct filtration of the outflowing fluid (11).

8. Method according to claim 6, **characterised in that** it consists of performing, outside the second tank (12), by means of a suitable filter, direct filtration of the outflowing fluid (11).

9. Method according to any of the above claims, **characterised in that** it consists of recycling the outflowing gas (10) and the outflowing liquid (11).

## Patentansprüche

1. Verfahren zur Hybridoxidation und zum Inkontaktbringen von Flüssigkeiten, **dadurch gekennzeichnet, dass** es darin besteht, mindestens zwei Fluide (1) und (2) gleichzeitig in mindestens zwei aufeinander folgende Aufprallzonen (5) und (8) zu injizieren, die in zwei unterschiedlichen Gefäßen (9) und (12) angeordnet sind, wobei die erste Aufprallzone (5) mittels mindestens einer ersten Leitung (4) gespeist wird und die zweite Aufprallzone (8) mittels mindestens einer zweiten Leitung (7) gespeist wird, die selbst mit dem Gemisch der Fluide gespeist wird, das aus der ersten Zone (5) austritt.

2. Verfahren nach Anspruch 1, **dadurch gekennzeichnet, dass** das erste Fluid (1) eine flüssige Phase ist und das zweite (2) eine Gasphase ist.

3. Verfahren nach Anspruch 2, **dadurch gekennzeichnet, dass** die Gasphase (2) aus Luft, Sauerstoff oder ozonhaltiger Luft ausgewählt ist.

4. Verfahren nach Anspruch 1, **dadurch gekennzeichnet, dass** es darin besteht, außerdem in dem ersten Gefäß (9) mittels eines geeigneten Filters (6) einen sehr spezifischen Filtrationsarbeitsgang durchzuführen.

5. Verfahren nach Anspruch 1, **dadurch gekennzeichnet, dass** es darin besteht, außerdem in der Leitung (7), die die erste Aufprallzone (5) mit der zweiten Aufprallzone (8) verbindet, mittels UV-Lampen und Katalysatoren unterschiedlicher Art eine sehr spezifische Behandlung durchzuführen.

6. Verfahren nach Anspruch 1, **dadurch gekennzeichnet, dass** es darin besteht, die zweite Aufprallzone (8) derart auf dem Boden des ersten Gefäßes (12) anzuordnen, dass ermöglicht wird, dass das Gemisch der Fluide, das aus der genannten zweiten Zone austritt, in dem genannten Gefäß hochsteigt.

7. Verfahren nach Anspruch 6, **dadurch gekennzeichnet, dass** es darin besteht, im oberen Teil des zweiten Gefäßes (12) mittels geeigneter Filtrationsmembranen, die in diesem aufgehängt sind, eine direkte Filtration des austretenden Fluids (11) durchzuführen.

8. Verfahren nach Anspruch 6, **dadurch gekennzeichnet, dass** es darin besteht, an der Außenseite des zweiten Gefäßes (12) mittels eines geeigneten Filters eine direkte Filtration des austretenden Fluids (11) durchzuführen.

9. Verfahren nach einem der vorhergehenden Ansprüche, **dadurch gekennzeichnet, dass** es darin besteht, das austretende Gas (10) sowie die austretende Flüssigkeit (11) rückzuführen.
